(19) Europäisches Patentamt European Patent Office Office européen des brevets

(11) **EP 2 088 689 A1**

(12) **EUROPEAN PATENT APPLICATION**

(43) Date of publication:
**12.08.2009 Bulletin 2009/33**

(51) Int Cl.:
*H04B 7/06* (2006.01)  *H04B 7/08* (2006.01)
*H04B 7/04* (2006.01)

(21) Application number: **08305014.6**

(22) Date of filing: **05.02.2008**

| | |
|---|---|
| (84) Designated Contracting States:<br>**AT BE BG CH CY CZ DE DK EE ES FI FR GB GR HR HU IE IS IT LI LT LU LV MC MT NL NO PL PT RO SE SI SK TR**<br>Designated Extension States:<br>**AL BA MK RS**<br><br>(71) Applicant: **Alcatel Lucent**<br>**75008 Paris (FR)** | (72) Inventors:<br>• **Lucidarme, Thierry**<br>  **78180, Montigny le Bretonneux (FR)**<br>• **Ben Rached, Nidham**<br>  **75017, PARIS (FR)**<br><br>(74) Representative: **Hervouet, Sylvie et al**<br>**Feray Lenne Conseil**<br>**39/41, avenue Aristide Briand**<br>**92163 Anthony Cedex (FR)** |

(54) **Transmission/reception system and method for a base station of a wireless communication network**

(57) The invention concerns a T/R system for use in a base station (1) of a wireless communication network, comprising a T/R antenna with an array of radiating elements for exchanging data traffic signals with at least one wireless terminal (T1, T2) and T/R control module for controlling said T/R antenna. According to the invention, said T/R system further comprises determination means (5) adapted to determine if said terminal (T1, T2) is located in a multipath rich environment or in a multipath poor environment. Antenna is then controlled either in a beamforming mode if said terminal is located in a multipath poor environment or in a MIMO mode if said terminal (T1) is located in a multipath rich environment (T2).

## FIG.1a

Sub area 12      Sub area 11

Vertical Diagram

**Description**

FIELD OF THE INVENTION

The invention relates generally to wireless communications, in particular to a transmission/reception system for use in a base station of a wireless communication network and to an associated transmission/reception method.

DESCRIPTION OF THE RELATED ART

The demand for wireless communication system has extremely grown over recent decades. In order to better satisfy the user's need of mobility while being connecting, several technological progress have been made over this time, particularly in the area of cellular and wireless local area network (WLAN) communication systems. In addition, the number of users still increases and data traffic is now becoming an important issue in the development of the wireless network. Both these factors mean that it is important for operators to look for methods for increasing the capacity of their network to meet future demand, especially in the future fourth generation system using WLAN technologies such as WIMAX, IEEE 802.11x and LTE (hight speed OFDM packet access)

In order to improve cell capacity, fourth generation communication systems in base station use multi antennas systems which can be classified in two families:

The most frequently used technology is to perform a transmission/reception according to a beamforming mode. This technique uses an array of a plurality of transmission/reception radiating elements and separately adjusts weights of signals for each transmission/reception radiating elements in order to emit in the same frequency range with different power according to the direction. Using the directivity of propagation diagrams obtained with this technology, interferences between two or more mobile terminals located simultaneously in a cell covered by the base station can be avoided. Beamforming technique can thus overcome the limitation of frequency resources and improve the cells capacity.

Nevertheless, to perform with precision an appropriate propagation diagram in the direction of a terminal, a base station needs first to correctly locate the terminal. This localisation is based on feedback information by means of channel responses from the terminal antenna to the base station. However, channel condition assessment difficulties appear when the antennas are employed in a multipath rich environment linked for instance to the presence of various scattering objects (buildings, cars, etc) in the environment and beamforming technique will be thus more efficient for communication with terminal which are in direct line-of-sight of the base station antenna and thus are not concerned with multipath propagation.

The other solution used to increase capacity is to perform a transmission/reception according to a Multi-Input Multi-ouput (MIMO) mode. The principle of the MIMO technology is to transmit/receipt in parallel a plurality of data streams on different antennas at the same frequency. The base station must be located in a multipath rich environment such that, due to the presence of various scattering objects (buildings, cars, etc) in the environment, each signal experiences multipath propagation. The multipath rich environment enables multiple orthogonal channels to be generated between the transmitter and receiver. Data for a single terminal can then be transmitted over the air in parallel over those channels, simultaneously and using the same bandwidth. Consequently, the effective data rate over the air is increased and thus the capacity of the cells is improved.

The major drawback of MIMO technology is that it requires a multipath rich environment. Consequently, not only gain of this technology is not significant any more when the terminal is not situated in a multipath rich environment but that in addition, for such a terminal, quality of the received signal can be significantly altered, received signal can even be unusable by such terminal.

None of the beamforming or MIMO technology is completely satisfactory for use in an urban cell. Indeed due to the presence of many objects such as buildings, cars, etc, a wireless terminal may be located in a multipath environment which is too rich for a transmission/reception using beamforming mode to correctly function and thus increase satisfactory the capacity of the cell. On the other hand, even in an urban cell, some terminals may be in direct line-of-sight of the base station. In this case, as mentioned above, the multipath environment may not be rich enough for the transmission/reception system to correctly function according to a MIMO mode.

SUMMARY OF THE INVENTION

The aim of the present invention is to propose a new transmission/reception system for a base station which associates the advantages of both beamforming/MIMO modes without their corresponding drawbacks.

In first aspect it is provided a transmission/reception system for use in a base station of a wireless communication network, comprising:

- a transmission/reception antenna including an array of radiating elements for exchanging data traffic signals with at least one wireless terminal;
- a transmission/reception control module for controlling said transmission/reception antenna;

**characterised in that**
said transmission/reception system further comprises determination means adapted to determine if said wireless terminal is located in a multipath rich environment or in a multipath poor environment; and

in that said transmission/reception control module is adapted to control said antenna:

- either in a first beamforming mode in which each of said radiating elements is controlled by an adaptive amplitude-phase law so that transmission/reception antenna forms a beam in the direction of said terminal when said terminal is located in a multipath poor environment
- or in a second MIMO mode in which only selected radiating elements forming a subset within said array are identically controlled when terminal is located in a multipath rich environment.

In second aspect it is provided method for transmitting/receiving data traffic signals in a base station of a wireless communication network, said base station comprising a transmission/reception antenna including an array of radiating elements for exchanging data traffic signals with at least one wireless terminal located in the coverage area of said antenna, **characterised in that** said method comprises:

- a first step of determining if said wireless terminal is located in a multipath rich environment or in a multipath poor environment;
- a second step of controlling said antenna

    o either in a first beamforming mode, in which each of said radiating elements is controlled by an adaptive amplitude-phase law so that transmission/reception antenna forms a beam in the direction of said terminal when said terminal is located in a multipath poor environment
    ○ or in a second MIMO mode, in which only selected radiating elements forming a subset within said array are identically controlled when terminal is located in a multipath rich environment.

BRIEF DESCRIPTION OF THE DRAWINGS

The features and advantages of the invention will become more apparent from the following detailed description with reference to the attached figures wherein:

- FIG 1a and FIG 1b represent respectively a vertical antenna diagram and a horizontal antenna diagram of a dual mode transmission/reception system in a base station according to the invention.
- FIG 2 is a general block diagram representing the different elements of a transmission/reception system implemented in a base station, which are involved to perform a transmission/reception with a terminal.
- FIG 3 represents schematically a specific preferred arrangement for an antenna of the transmission/reception system according to the invention.
- FIG 4 shows a schematic diagram representing the different steps of a method for transmitting/receipting data traffic signal in accordance with a specific embodiment of the invention.

DETAILED DESCRIPTION

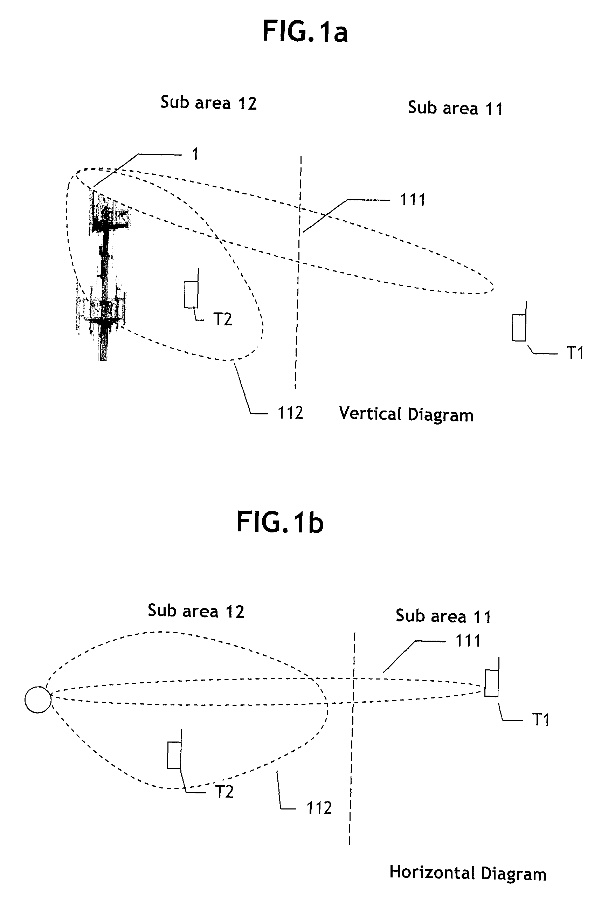

As shown in Figure 1, a base station 1 according to the invention is adapted to exchange signals with at least two terminals T1, T2 using two different antenna diagrams 111, 112. Typically, base station 1 can be implemented in an urban environment. Terminals T1, T2 are located respectively in two sub-areas 11, 12. The purpose of the invention is to allow the base station to exchange data traffic either in a MIMO mode or in a beamforming mode with a given terminal depending whether this terminal is located in a multipath rich environment or in a multipath poor environment.

More precisely, assuming that terminal T1 is located in a sub-area 11 in which few multipath propagation occurs during a communication, the transmission/reception system of the invention is adapted to exchange data traffic signals with terminal T1 using a beamforming mode (antenna diagram 111). On the contrary, for terminal T2 which is assumed to be located in a rich multipath environment, the transmission/reception system of the invention is adapted to exchange data traffic signals using a MIMO mode (antenna diagram 112).

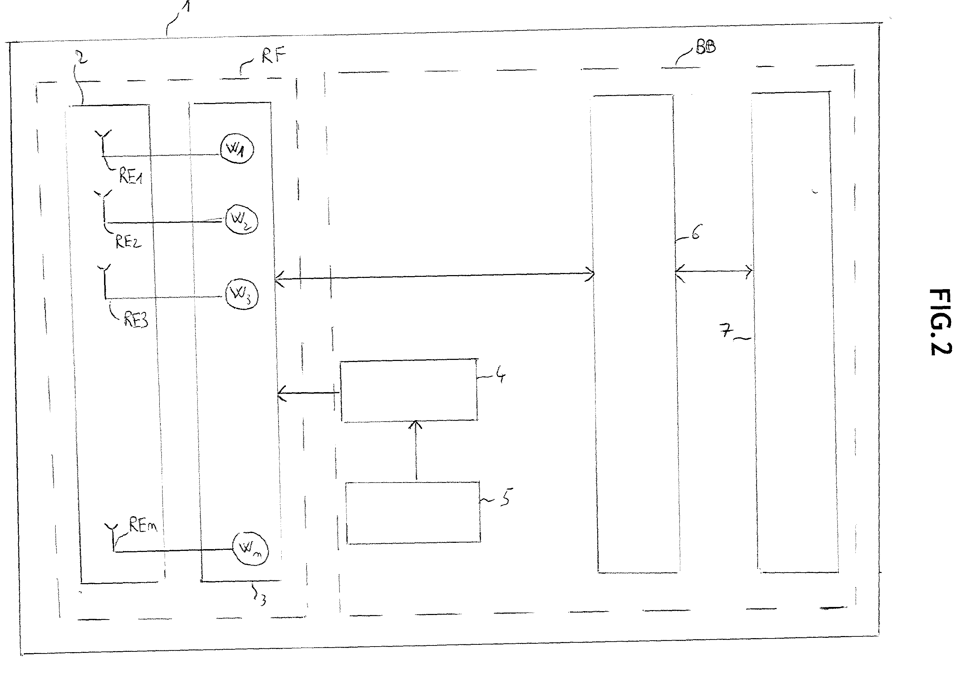

A schematic representation of the transmission/reception system for a base station is represented Figure 2. The system classically comprises:

- a radio frequency module RF comprising:

    ○ an antenna 2 which includes n passive radiating elements REi, where $1<i<n$, each radiating element being separately supplied by an amplitude-phase law.
    ○ a block 3 comprising n baseband transceivers Wi where $1<i<n$, supplying the radiating element REi of the antenna 2.

- a base band module BB comprising:

    ○ a modulation/demodulation module 6;
    ○ a digital processing module 7;
    ○ a control module 4 adapted to control transceivers Wi;

In an alternative way, radiating elements REi of the antenna 2 may also be active elements directly controlled by control module 4.

According to the invention, transmission/reception system also comprises a determination module 5 adapted to determine in which type of multipath environment (rich or poor) terminals T1, T2 are located and control module 4 is adapted to control transmission/reception of said antenna 2 either in a first beamforming mode, or in a second MIMO mode, depending on the result delivered by determination module 5.

When base station 1 wants to send a data traffic signal to terminals T1, T2 (downlink transmission), digital processing module 7 is adapted to select the information bits to be transmitted to terminals T1, T2 and to transmit the selected bits to modulation/demodulation module 6 which is adapted to modulate the bits on a baseband signal and to transmit the modulated signal to the transceivers Wi. Then, in accordance with the type of environment in which the terminal is located, determined by determination module 5, control module 4 is adapted to control transceivers Wi so that they correctly supply radiating elements REi according to the transmission mode adapted to the environment in which terminals T1, T2 are located. Radiating elements RE1 transmit then the appropriate signal in the appropriate mode to terminals T1, T2.

When base station 1 receives a data traffic signal from a terminal T1, T2 (uplink transmission), radiating elements REi are adapted to transmit the received signal to transceivers Wi. In accordance with the type of environment in which is located the terminal, determined by determination module 5, control module 4 is adapted to control transceivers Wi so that they correctly process the received signal according to the reception mode adapted to the environment in which terminals T1, T2 are located. Then transceivers Wi are adapted to transmit the correctly adapted baseband signal to modulation/demodulation module 6, which demodulates the baseband signal in a digital signal. The digital signal is then processed by digital processing module 7 to correctly transmit to base station 1 the information bits contained in the data traffic signal emitted by terminals T1, T2.

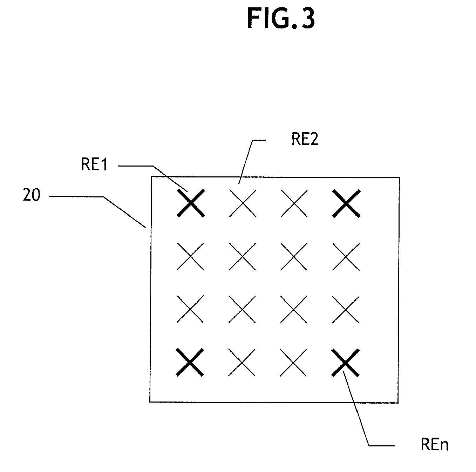

Operations and interactions between control module 4 and transceiver Wi elements of the transmission/reception system according to the invention will now be described with the help of figures 2 and 3.

The control performed by control module 4 is even more effective than the geometrical aspect of antenna 2 and the disposal of radiating elements REi on antenna 2 are adapted to suit both beamforming mode and MIMO mode. More precisely, the geometrical aspect of antenna 2 and the disposal of radiating elements REi on the array should:

- be optimized to obtain a highly directional beam when antenna 2 operates in a the beamforming mode with terminal T1 located within sub-area 11 and;
- allow a proper selection of radiating elements REi when antenna 2 operates in the MIMO mode with terminal T2 located within sub-area 12.

As shown in figure 3, a specific non-limitative arrangement of an array 20 may comprise sixteen radiating elements REi.

On one hand, to prevent the formation of gratings lobes in a beamforming transmission mode, radiating elements REi must be separated by a distance of half a wavelength $\lambda/2$ on the facet. For instance, wavelengths used in actual fourth generation cellular communication systems have been normalized by the IEEE 802.11b and are around 2.4 GHz. Then, distance between two radiating elements may be set to 7 cm. In addition, as shown on figure 3, antenna 2 can be advantageously square-shaped. The numbers of radiating elements disposed vertically and horizontally are thus equal. The number of horizontal (respectively vertical) radiating elements REi is proportional to the horizontal (respectively vertical) dimension of antenna 2 and determines the resolution and the width of the horizontal and vertical diagrams of antenna 2. For a square-shaped antenna 2, the beam generated in the direction settled by the adaptive choice of the weights is even narrower than radiating elements REi are arranged in a symmetrical array.

On the other hand, in a MIMO transmission/reception mode, a sufficient spatial decorrelation between the signals sent/received by the radiating elements must exist. Thus, the subset of radiating elements REi of the array 20 which are used for a MIMO mode must be separated by a distance of few wavelengths $\lambda$. In order to respect this minimal distance between the radiating elements REi selected to be used in a MIMO mode, control module 4 is adapted to perform the selection so that radiating elements REi forming the subset are selected within array among the most spaced radiating element REi of the array 20. For a square-shaped antenna 2 the selected radiating elements REi are located, as show in bold on figure 3, at the four corners.

In an alternative way, the subset of radiating elements REi which is selected to cover zone 12 may be composed of two or three elements. In this case, their position on array 20 of antenna 2 needs also to maximize the distance between each element REi of the subset.

The selection and weighting of radiating elements REi or associated transceivers Wi achieved by control module 4 is now illustrated in the case where radiating elements REi are specifically arranged on a array as shown in figure 3.

As already mentioned above, each radiating elements REi of the array is a passive or active component and is powered by an amplitude-phase law. Each component of the antenna represents a complex weighting $a_{i,j}$ of the reference signal.

More precisely, during an uplink transmission, control module 4 controls each transceiver Wi so that a complex weighting $a_{i,j}^{k}$ is applied to the received signal $s_{i,j}^{k}(t)$ of each radiating element REi for each terminal k. Each transceiver then generates an $a_{i,j}^{k} s_{i,j}^{k}(t)$ signal. According to the specific disposition of radiating elements REi on array 20 shown in figure 3, weightings performed on the transceiver Wi by control module 2 can be represented by a weighting matrix.

When terminals T1, T2 are determined to be located in a poor multipath environment, the value of the matrix is:

$$\begin{bmatrix} a_{1,1}^{k} & & \\ & a_{i,j}^{k} & \\ & & a_{n,n}^{k} \end{bmatrix} \quad \forall i,j, \ \left| a_{i,j}^{k} \right| \leq 1$$

After control module 4 has performed the weighting according the above matrix, the $a_{i,j}^{k} s_{i,j}^{k}(t)$ signals are summed up with a beamforming processing mode of control module 4 and the summed signal $\sum_{i} \sum_{j} a_{i,j}^{k} s_{i,j}^{k}(t)$ is sent to the modulation/demodulation module 6.

When terminals T1, T2 are determined to be located in a rich multipath environment, the value of the matrix is:

$$\begin{bmatrix} 1 & 0 & 0 & 1 \\ 0 & 0 & 0 & 0 \\ 0 & 0 & 0 & 0 \\ 1 & 0 & 0 & 1 \end{bmatrix} \quad \forall i,j, \ a_{i,j}^{k}=0 \ \text{ and } \ a_{\max(i),j}^{k}=a_{\min(i),j}^{k}=a_{i,\max(j)}^{k}=a_{i,\min(j)}^{k}=1$$

By performing such a weighting matrix it can be considered that control module 4 performs a selection of subset of radiating elements REi within the array which are identically controlled. After control module 4 has performed the weighting according to the above matrix, the four generated signals $a_{\max(i),j}^{k}s_{\max(i),j}^{k}(t)$, $a_{\min(i),j}^{k}s_{\min(i),j}^{k}(t)$,

$a_{i,\max(j)}^{k}s_{i,\max(j)}^{k}(t)$, $a_{i,\min(j)}^{k}s_{i,\min(j)}^{k}(t)$ will be independently processed with a MIMO processing mode of control module 4 and the resulting baseband signal is then sent to modulation/demodulation module 6.

Similarly during a downlink transmission, control module 4 controls each transceiver Wi so that the baseband signal generated by modulation/demodulation module 6 is processed into $a_{i,j}^{k}s_{i,j}^{k}(t)$ signals which are then transmitted to the corresponding radiating element REi. Thus, antenna 2 transmits the corresponding data traffic signal to terminals T1, T2 with the correct transmission mode.

When antenna 2 has not the specific scare-shape shown in figure 3, the weighting matrix applied to the transmitted/received signal is not necessarily a square matrix. Additionally, the weighting matrix takes into account the fact that the transmission/reception in a MIMO mode may also be done, as already mentioned, with two or three radiating elements REi of array 20.

With such geometrical aspect of antenna 2 and a disposal of radiating elements REi combined with such a module control 4, it is possible to reduce the volume and cost of a base station 1 which is able to exchange traffic data signals in either a beamforming mode or a MIMO mode, since same antenna 2 is used to transmit/receive signals in the two different modes.

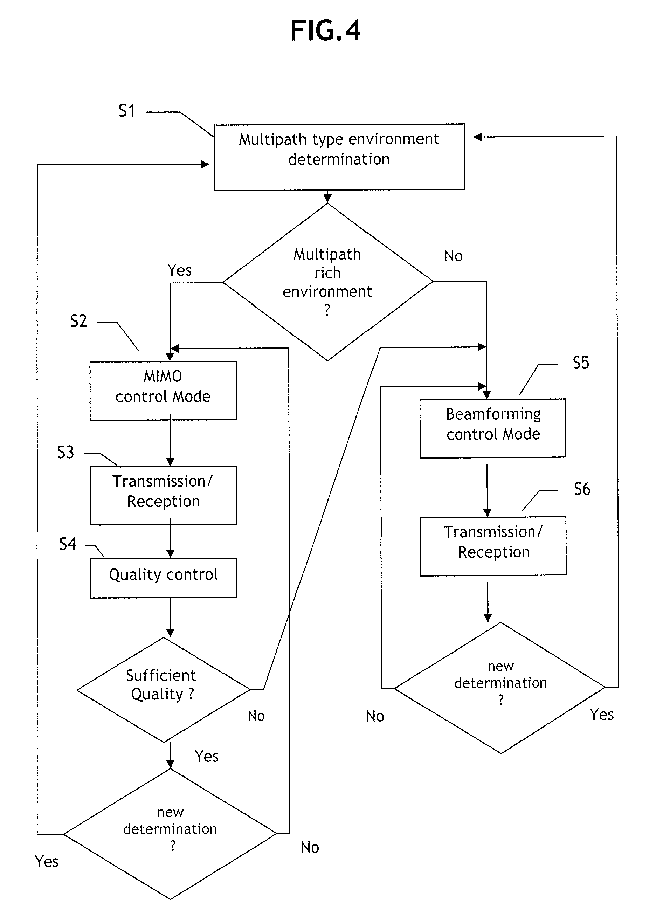

Figure 4 represents the different steps of a method for transmitting/receiving data traffic signal in accordance with a specific embodiment of the invention. Before performing the control of the radiating elements to obtain a signal corresponding either to a transmission/reception in a MIMO mode or in a beamforming mode, the transmission/reception system of base station 1 needs to determine (step S1 on figure 4) the most adequate mode to use to communicate with terminals T1, T2. For complementary reasons previously cited, it is interesting that the distribution of the terminals T1, T2 be performed considering the multipath degree in which is located the terminal T1, T2. Therefore, the transmission/ reception system comprises determination means 5 for determining if said wireless terminal is located in a rich multipath environment or in a poor multipath environment.

In an urban area, sub-area 12 may typically represent an area where the terminals are located near the transmission/reception antenna, situation which increases the angular diversity. On the other hand sub-area 11 may correspond to a remote area, typically a border cell of a cellular communication network, for which, given to the distance between terminal T1 and base station 1, angular diversity is low. Since the rich/poor multipath environment notion is then often linked to the notion of proximity/distance between terminals T1, T2 and base station 1, an interesting way to sort terminals T1, T2 in two groups, is to use a distance criteria in calculating the distance between each terminal T1, T2 and base station 1. A commonly located process can be used to determine both the position angle and the distance of the terminal from the antenna of the base station. In order to allow an operator to adapt each base station 1 with the specific urban characteristics, the distance sorting criteria is configurable and can be set in advance by the operator. Thus, if the calculated distance between terminal T1, T2 and base station 1 is less than a predetermined threshold value, control module 4 will control antenna 2 to perform a data traffic exchange in a MIMO mode and if the calculated distance between terminal T1, T2 and the base station 1 is greater than said threshold value, control module 4 will control antenna 2 to perform a data traffic exchange in a beamforming mode.

An other possibility to determine the multipath degree in which terminals T1, T2 are located can be made by using the knowledge at the receiver of the channel matrix transfer M. A narrowband communication system with a number $M^T$ of transmit antennas and a number of $N^R$ receiving antennas can indeed be modelled by its $M^T \times N^R$ transfer matrix M where an element m(i,j) of this matrix represents the complex channel gain from the transmitting antenna j to the receiving antenna i. The elements m(i,j) are estimated at the receiver thanks to the known pilot symbols transmitted by the broadcast common channel for the downlink case and transmitted by a dedicated channel for the uplink case.

The algebraic rank of this matrix represents the number of degree of freedom of the channel and is evaluated through a classical rank calculation such as the SVD (Singular Value Decomposition). According to this rank calculation, M has a singular value decomposition in the form $M=UDV^*$ where U and V are $N^R x N^R$ and $M^T x M^T$ unitary matrices and D is a diagonal matrix. Each element $s(i,i)$ of matrix D is called singular value of matrix M and the number of non zero elements of matrix D represents the rank of the channel matrix M.

If the rank r of the channel matrix transfer M is greater than one, control module 4 will then control antenna 2 to perform a data traffic exchange in a MIMO mode. If the rank r of the channel matrix transfer M is inferior or equal to one, control module 4 will then control antenna 2 to perform a data traffic exchange in a beamforming mode. Using this evaluation process is even more interesting that the value of the rank of the matrix may also indicate the number of antennas to be used in the MIMO mode. Thus, for example, if the rank r of the channel matrix transfer M is equal to three, the number of radiating elements to be selected by control module 4 for the MIMO transmission/reception mode will be three.

After having determined the type of environment in which terminals T1, T2 are located, control module 4 of the transmission/reception system controls radiating elements REi in order antenna 2 of base station 1 can perform a data traffic exchange with the corresponding transmission mode (steps S2 or S5 on figure 4).

However, in case it is determined that a terminal considered to be in a multipath rich environment is not able, for any reason (it does not support MIMO technology, one of its antenna does not work anymore...) to exchange data traffic signal in a MIMO mode with base station 1, the result of the determination of the multipath type environment is advantageously not tacking in account and each radiating element REi is controlled by an adaptive amplitude-phase law.

Furthermore, given the mobility of terminals T1, T2, it is necessary to regularly make the determination of the environment type at periodic times.

Additionally to reduce the chance of having determined a wrong environment, a procedure for monitoring quality of communication can be added (step S4 on figure 4). If the quality of communication is sharply deteriorated and becomes insufficient with a transmission mode, control module 4 will automatically perform a switch to control receiving elements REi in the other transmission mode. This protection will be useful especially for the case in which antenna 2 is controlled in a MIMO mode. Indeed, as already mentioned an inappropriate transition in this transmission/reception mode can be very damaging to the quality of communication and may even cause the interruption of the communication.

**Claims**

1. Transmission/reception system for use in a base station (1) of a wireless communication network, comprising :

    - a transmission/reception antenna (2) including an array (20) of radiating elements (RE1, REn) for exchanging data traffic signals with at least one wireless terminal (T1, T2);
    - a transmission/reception control module (4) for controlling said transmission/reception antenna (2);

    **characterised in that**
    said transmission/reception system further comprises determination means (5) adapted to determine if said wireless terminal (T1, T2) is located in a multipath rich environment or in a multipath poor environment; and
    **in that** said transmission/reception control module (4) is adapted to control said antenna (2):

    - either in a first beamforming mode in which each of said radiating elements (RE1, REn) is controlled by an adaptive amplitude-phase law so that transmission/reception antenna (2) forms a beam in the direction of said terminal (T1, T2) when said terminal (T1, T2) is located in a multipath poor environment
    - or in a second MIMO mode in which only selected radiating elements (RE1, REn) forming a subset within said array (20) are identically controlled when terminal (T1, T2) is located in a multipath rich environment.

2. The transmission/reception system as claimed in claim 1, **characterised in that** said determination means (5) are adapted to determine if said wireless terminal is located in a multipath rich environment or in a multipath poor environment by performing an estimation of a distance between said terminal (T1, T2) and said base station (1).

3. The transmission/reception system as claimed in claim 2, **characterised in that** said determination means (5) determines that the said terminal (T1, T2) is located:

    - in a multipath poor environment when the said estimated distance is greater than a threshold value or;
    - in a multipath rich environment when the said estimated distance is lower or equal to a threshold value.

4. The transmission/reception system as claimed in claim 1, **characterised in that** said determination means (5) are adapted to determine if said wireless terminal is located in a multipath rich environment or in a multipath poor environment by determining the rank of a channel matrix transfer.

5. The transmission/reception system as claimed in claim 4, **characterised in that** said determination means (5) are adapted to determine that the said terminal (T1, T2) is located:

   - in a multipath poor environment when the rank r of said channel matrix transfer is lower or equal to one or;
   - in a multipath rich environment when the rank r of said channel matrix transfer is greater than one.

6. The transmission/reception system as claimed in anyone of the preceding claims, **characterised in that** the radiating elements (RE1, REn) forming the subset are selected within said array (20) among the most spaced radiating elements (RE1, REn) of said array.

7. The transmission/reception system as claimed in anyone of the preceding claims, **characterised in that** said radiating elements (RE1, REn) are arranged in a symmetrical array (20).

8. The transmission/reception system as claimed in claim 7, **characterised in that** said antenna (2) is a square-shaped.

9. The transmission/reception system as claimed in anyone of the preceding claims, **characterised in that** number of radiating elements (RE1, REn) is two, three or four.

10. The transmission/reception system as claimed in claim 8, **characterised in that** the selected radiating elements (REi, REn) are located at the four corners of said square-shaped antenna (2).

11. A Method for transmitting/receiving data traffic signals in a base station (1) of a wireless communication network, said base station (1) comprising a transmission/reception antenna (2) including an array (20) of radiating elements (RE1, REn) for exchanging data traffic signals with at least one wireless terminal (T1, T2) located in the coverage area of said antenna, **characterised in that** said method comprises:

   - a first step of determining (S1) if said wireless terminal is located in a multipath rich environment or in a multipath poor environment;
   - a second step of controlling said antenna (2)

      ○ either in a first beamforming mode (S5), in which each of said radiating elements (RE1, REn) is controlled by an adaptive amplitude-phase law so that transmission/reception antenna (2) forms a beam in the direction of said terminal (T1, T2) when said terminal (T1, T2) is located in a multipath poor environment
      ○ or in a second MIMO mode (S2), in which only selected radiating elements (RE1, REn) forming a subset within said array (20) are identically controlled when terminal (T1, T2) is located in a multipath rich environment.

12. The method as claimed in claim 11, **characterised in that** prior to said first step of determining if said wireless terminal is located in a multipath rich environment or in a multipath poor environment, the method further comprises the step of:

   - determining if the said terminal (T1, T2) is able to function in a MIMO mode and;
   in case of said terminal is not able to function in a MIMO mode:
   - not taking in account the result of the determination of the multipath type environment and;
   - controlling (S5) each said radiating element (RE1, REn) by an adaptive amplitude-phase law.

13. The method as claimed in claim 11, **characterised in that,** when said antenna 2 is controlled in said MIMO mode, the method further comprises the step of;

   - determining the quality of the data traffic transmission/reception signal (S4) between said antenna (2) and said terminal (T1, T2) and;
   - if the determined quality is insufficient, switching in the beamforming mode.

# FIG.1a

Sub area 12                    Sub area 11

Vertical Diagram

# FIG.1b

Sub area 12                    Sub area 11

Horizontal Diagram

# FIG.2

# FIG.3

# FIG.4

S1

Multipath type environment
determination

Multipath
rich
environment
?

Yes

No

S2

MIMO
control Mode

S5

Beamforming
control Mode

S3

Transmission/
Reception

S6

Transmission/
Reception

S4

Quality control

Sufficient
Quality ?

No

new
determination
?

Yes

No

Yes

new
determination
?

No

Yes

Yes

No

**European Patent Office**

# EUROPEAN SEARCH REPORT

Application Number

EP 08 30 5014

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| Y | EP 1 387 501 A (SONY INT EUROP GMBH [DE]) 4 February 2004 (2004-02-04) * paragraph [0007] * * paragraph [0010] - paragraph [0012] * * paragraph [0017] * * paragraph [0027]; figures 3,4 * ----- | 1-13 | INV. H04B7/06 H04B7/08 ADD. H04B7/04 |
| Y | EP 1 227 539 A (LUCENT TECHNOLOGIES INC [US]) 31 July 2002 (2002-07-31) * paragraph [0001] * * paragraph [0004] - paragraph [0009] * * paragraph [0016] * * paragraph [0024]; figure 1 * ----- | 1-13 | |

TECHNICAL FIELDS SEARCHED (IPC)

H04B

The present search report has been drawn up for all claims

| Place of search | Date of completion of the search | Examiner |
|---|---|---|
| Munich | 17 July 2008 | Sieben, Stefan |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

EP 2 088 689 A1

**ANNEX TO THE EUROPEAN SEARCH REPORT**
**ON EUROPEAN PATENT APPLICATION NO.**                    EP 08 30 5014

This annex lists the patent family members relating to the patent documents cited in the above-mentioned European search report.
The members are as contained in the European Patent Office EDP file on
The European Patent Office is in no way liable for these particulars which are merely given for the purpose of information.

17-07-2008

| Patent document cited in search report | | Publication date | Patent family member(s) | | Publication date |
|---|---|---|---|---|---|
| EP 1387501 | A | 04-02-2004 | NONE | | |
| EP 1227539 | A | 31-07-2002 | DE | 60111343 D1 | 14-07-2005 |
| | | | DE | 60111343 T2 | 16-03-2006 |
| | | | JP | 3845022 B2 | 15-11-2006 |
| | | | JP | 2002290148 A | 04-10-2002 |
| | | | US | 2002132600 A1 | 19-09-2002 |

EPO FORM P0459

For more details about this annex : see Official Journal of the European Patent Office, No. 12/82

14